# EUROPÄISCHE PATENTANMELDUNG

(11) **EP 2 112 462 A1**
(43) Veröffentlichungstag der Anmeldung: **28.10.2009**
(21) Anmeldenummer: 08155221.8
(22) Anmeldetag: 25.04.2008
(51) Int. Cl.: G01B 5/06, G01B 7/06, G01B 11/06, B65H 7/00, B07C 5/02, D21F 7/06

(54) **Messvorrichtung zum Messen der Dicke von Druckprodukten**

(71) Anmelder: Müller Martini Holding AG, 6052 Hergiswil (CH)
(72) Erfinder: Duss, Hanspeter, 4600 Olten (CH)

(57) **Zusammenfassung**

Eine Vorrichtung zum Messen der Dicke von mittels Transportvorrichtung entlang einer Führungsanordnung geförderten Druckprodukten weist ein mit der Führungsanordnung einen Messspalt bildenden, die Druckbogen auf der von der Führungsanordnung abgewandten Seite beaufschlagendes Messelement auf, das mit einer Auswertevorrichtung verbunden ist, und dass das gegen die Führungsanordnung im Verarbeitungstakt auf die Druckprodukte zugestellte Messelement über einen sich zur Förderrichtung erstreckenden Messbereich der Führungsanordnung synchron mit der Fördergeschwindigkeit bewegbar ist.

## Beschreibung

Die Erfindung betrifft eine Vorrichtung zum Messen der Dicke von mittels Transportvorrichtung entlang einer Führungsanordnung geförderten Druckprodukten, mit einem mit der Führungsanordnung einen Messspalt bildenden, die Druckbogen auf der von der Führungsanordnung abgewandten Seite beaufschlagenden Messelement, das mit einer Auswertevorrichtung verbunden ist.

Eine Vorrichtung zum Messen der Dicke von Druckprodukten ist im Stand der Technik aus der CH-A-523 787 bekannt geworden. Diese weist ein Tastrad auf, dem ein Gegenrad zugeordnet ist. Zwischen diesen beiden Rädern laufen die zu messenden Druckprodukte hindurch. Entsprechend der Dicke des gemessenen Druckproduktes wird das Tastrad ausgelenkt. Zu dünne Druckprodukte mit einem oder mehreren fehlenden Druckbogen können damit ermittelt und ausgeschleust werden. In der Praxis hat sich diese Vorrichtung an sich bewährt. Bei Druckprodukten mit dünnem Papier können durch Walken jedoch die einzelnen Druckbogen gegeneinander verschoben werden. Auf Druckprodukten mit empfindlichen Oberflächen können durch das Messen zwischen den beiden Rädern unerwünschte Markierungen entstehen. Da die Rollen sehr präzise gelagert und bei schnell laufenden Maschinen angetrieben werden müssen, ist diese Messvorrichtung vergleichsweise aufwändig.

Die US-A-4,170,346 offenbart eine Messvorrichtung, mit welcher durchlaufende Druckprodukte kapazitiv und damit berührungslos messbar sind. Zum Messen von dünnen Druckprodukten ist jedoch eine kapazitive Messung zu wenig genau und es besteht eine vergleichsweise grosse Streuung.

Die EP-A-0 714 789 offenbart eine Messvorrichtung an einem Sammelhefter, die ebenfalls mit einem Tastrad und einem Gegenrad arbeitet. Die Bewegung des Tastrades senkrecht zur Transportrichtung wird mittels eines Laserstrahles gemessen. Diese Vorrichtung besitzt ebenfalls die oben genannten Schwierigkeiten.

Der Erfindung liegt die Aufgabe zu Grunde, eine Messvorrichtung der genannten Art zu schaffen, welche die genannten Nachteile und Schwierigkeiten vermeidet. Insbesondere soll die erfindungsgemässe Messvorrichtung so ausgebildet sein, dass Druckprodukte schonender und insbesondere ohne Walken gemessen werden können.

Die Aufgabe ist bei einer gattungsgemässen Messvorrichtung dadurch gelöst, dass das Messelement jeweils wenigstens bereichsweise mit dem zu messenden Druckprodukt mitbewegbar ist und dass die zu messenden Druckprodukte jeweils mit dem Messelement gegen eine Führungsanordnung beaufschlagbar sind. Bei der erfindungsgemässen Messvorrichtung fährt das Messelement somit mit dem zu messenden Druckprodukt mit, wodurch ein Walken und Beschädigen des Druckproduktes vermieden wird. Mit dem Messelement kann die Dicke des Druckproduktes mechanisch abgetastet werden, was auch ein Messen von einzelnen vergleichsweise dünnen Einzelbogen ermöglicht. Es können aber auch dickere Produkte, beispielsweise Zeitungen, Broschüren, Bücher und dergleichen mit dieser Messvorrichtung gemessen werden. Ein weiterer Vorteil der erfindungsgemässen Messvorrichtung besteht darin, dass die Produktgeometrie des Druckproduktes beim Messvorgang nicht gestört wird. Auf einfache Art und Weise kann der Messpunkt auf dem Druckprodukt verschoben werden. Zudem ist ein vergleichsweise einfacher Aufbau möglich.

Nach einer Weiterbildung der Erfindung ist vorgesehen, dass das Messelement mit einer Geschwindigkeit bewegbar ist, welche im Wesentlichen gleich ist wie die Transportgeschwindigkeit des zu messenden Druckproduktes. Damit wird beim Messvorgang eine Relativbewegung zwischen dem Messelement und dem zu messenden Druckprodukt vermieden, was eine besonders schonende Messung ermöglicht.

Vorzugsweise wird gegen einen ortsfeste Führungsanordnung gemessen. Diese Führungsanordnung kann konstruktiv einfach beispielsweise durch eine steife Blechkonstruktion oder dergleichen realisiert werden. Zur Vermeidung von Reibungskräften kann ein Messbereich der Führungsanordnung mit einer reibungsvermindernden Beschichtung, beispielsweise einem geeigneten Kunststoff versehen sein. Zudem ist gemäss einer Weiterbildung vorgesehen, dass auf der beaufschlagten Seite der Führungsanordnung ein Luftkissen erzeugbar ist.

Nach einer Weiterbildung der Erfindung ist das Messelement jeweils im Wesentlichen quer zur Transportrichtung der Druckprodukte gegen diese bewegbar. Grundsätzlich ist aber auch eine Ausführung denkbar, bei welcher von einem rechten Winkel zur Transportrichtung abgewichen wird. Insbesondere kann das Messelement in seiner Längsrichtung linear bewegbar oder schwenkbar sein.

Nach einer Weiterbildung der Erfindung ist das Messelement gesteuert gegen das jeweils zu messende Druckprodukt bewegbar. Die Geschwindigkeit, mit dem das Messelement gegen das Druckprodukt bewegt wird, ist vorzugsweise so gesteuert, dass die Geschwindigkeit mit abnehmendem Abstand zum Druckprodukt verkleinert wird. Damit ist ein noch schonenderes und zudem präziseres Messen möglich. Die Steuerung kann auf Grund einer Referenzmessung erfolgen. Damit ist es möglich, unmittelbar vor der Beaufschlagung des Druckproduktes die Geschwindigkeit des Messelementes zu senken. Damit ist auch ein Bewegungsprofil möglich, das sich nach der mittleren Dicke der Druckprodukte richtet. Dicke Druckprodukte, wie beispielsweise Zeitungen, Broschüren und dergleichen können somit mit einem anderen Bewegungsprofil gemessen werden als beispielsweise Einzelbögen aus vergleichsweise dünnem Papier.

Nach einer Weiterbildung der Erfindung sind Messmittel vorgesehen, mit denen eine Messstrecke bestimmbar ist, welche das Messelement beim Beaufschlagen eines Druckproduktes zurücklegt. Diese Messmittel können unterschiedlich ausgebildet sein. Sie können beispielsweise mechanisch, optisch, elektrisch oder dergleichen sein. Insbesondere ist ein Messmittel vorgesehen, das berührungslos den genannten Weg bestimmt. Insbesondere ist ein Messmittel mit einem Laserstrahl vorgesehen.

Nach einer Weiterbildung der Erfindung besitzt das genannte Messmittel eine Messspule. Diese kann unmittelbar am Messelement angeordnet werden und ermöglicht ein schnelles und präzises Messen der Bewegung des Messelementes.

Nach einer Weiterbildung der Erfindung ist das Messelement auf einem Träger oder Wagen angeordnet, der für jeweils eine Messung mit dem zu messenden Druckprodukt in Transportrichtung des Druckproduktes bewegbar ist. Der Träger bzw. der Wagen kann beispielsweise mit einem Linearmotor oder einem anderen geeigneten Servomotor bewegt werden. Der Träger bzw. der Wagen kann mit dem Motor im Takt mit den zu messenden Druckprodukten in Transportrichtung in einem Messbereich bewegt und dann wieder in die Ausgangsstellung gebracht.

Nach einer Weiterbildung der Erfindung wird das Messelement mit einem Motor und insbesondere einem Linearmotor gegen das zu messende Druckprodukt bewegt. Diese Bewegung des Messelementes erfolgt im Takt mit dem Transport der Druckprodukte. Der Linearmotor ermöglicht ein gesteuertes Bewegen des Messelementes. Insbesondere sind dann präzise gesteuerte Bewegungsprofile möglich. Insbesondere kann dann sehr präzise die Geschwindigkeit des Messelementes beim Annähern des Druckproduktes gesenkt werden. Es sind damit insbesondere sehr schnelle Messungen möglich. Beispielsweise kann dann auch ein Druckprodukt mehrfach gemessen werden. Dadurch sind beispielsweise auch Kontrollmessungen möglich.

Nach einer Weiterbildung der Erfindung ist vorgesehen, dass das Messelement ein vorderes Ende aufweist, an dem ein bewegliches Teil, insbesondere ein Rad oder eine Kugel gelagert ist. Alternativ kann am genannten vorderen Ende ein Luftpolster gebildet werden. Dadurch ist ein noch schonenderes Abtasten der Druckprodukte möglich.

Nach einer Weiterbildung der Erfindung ist das Messelement in einem Führungselement verschieblich gelagert. Dieses Führungselement ist dann vorzugsweise in Transportrichtung der Druckprodukte bewegbar. Das Messelement kann somit gleichzeitig mit der Tastbewegung gegen das Druckprodukt in der Transportrichtung bewegt werden.
Das vordere Ende des Messelements kann durch entsprechende Ansteuerung der Linearmotoren auf einer beliebigen, veränderbaren Bahn bewegt werden.

Nach einer Weiterbildung der Erfindung ist vorgesehen, dass das Messelement durch die Kraft eines gespannten Federelements gegen das zu messende Druckprodukt bewegbar ist. Bei jeder Rückbewegung des Messelements in die Ruhestellung kann das Federelementes wieder gespannt werden.

Nach einer Weiterbildung der Erfindung ist vorgesehen, dass das Messelement im Wesentlichen als Stempel oder fingerförmig ausgebildet ist. Insbesondere ist hierbei das Messelement mit einer vorderen Tastfläche versehen, mit welcher das zu messende Druckprodukt beaufschlagt wird. Das Beaufschlagen ist dann besonders schonend, wenn das Messelement Mittel zum Bilden eines Luftpolsters auf der genannten Tastfläche besitzt.

Nach einer Weiterbildung der Erfindung ist vorgesehen, dass die Messvorrichtung wenigstens zwei Messelemente aufweist, die bezüglich der Transportstrecke im Wesentlichen symmetrisch zueinander angeordnet sind. Damit ist eine Messvorrichtung möglich, bei welcher sich die auf die Führungsanordnung wirkenden Messkräfte weitgehend aufheben. Beispielsweise können bei einem Transport der Druckprodukte auf einer Sammelkette die beiden Messelemente spiegelsymmetrisch angeordnet und auch gleichzeitig bewegt werden. Insbesondere ist dadurch eine einfache und doppelte Dickenmessung am gleichen Druckprodukt möglich. Damit können Messfehler vermindert werden. Insbesondere ist vorgesehen, dass die wenigstens zwei Messelemente auf dem gleichen Träger bzw. Wagen angeordnet und somit gleichzeitig bewegt werden.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: Schematisch einen Schnitt durch eine erfindungsgemässe Messvorrichtung und eine Transportvorrichtung entlang der Linie I-I der Figur 2,
- Fig. 2: Schematisch eine Draufsicht auf eine erfindungsgemässe Vorrichtung und einen Abschnitt der Transportvorrichtung,
- Fig. 3a-3d: Ausführungsbeispiele des Messelementes,
- Fig. 4a-4c: Schematisch Schnitte durch Ausführungsbeispiele der Transportvorrichtung,
- Fig. 5: Schematisch eine räumliche Ansicht der erfindungsgemässen Messvorrichtung und eines Abschnittes der Transportvorrichtung,
- Fig. 6: Schematisch eine Ansicht einer erfindungsgemässen Messvorrichtung gemäss einer Variante,
- Fig. 7a-7c: Bewegungsprofile des Messelementes wobei die vertikale Achse die Position und die horizontale Achse die Zeit angeben,
- Fig. 8: Schematisch eine Seitenansicht der erfindungs gemässen Vorrichtung und eines Abschnittes der Transportvorrichtung,
- Fig. 9: Schematisch ein Schnitt durch die Messvorrichtung entlang der Linie IX-IX der Figur 8.

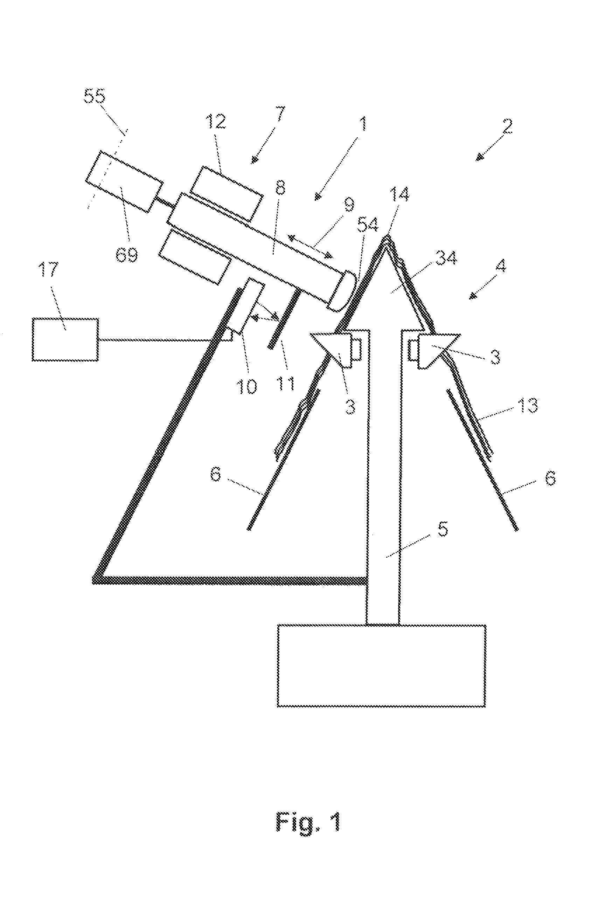

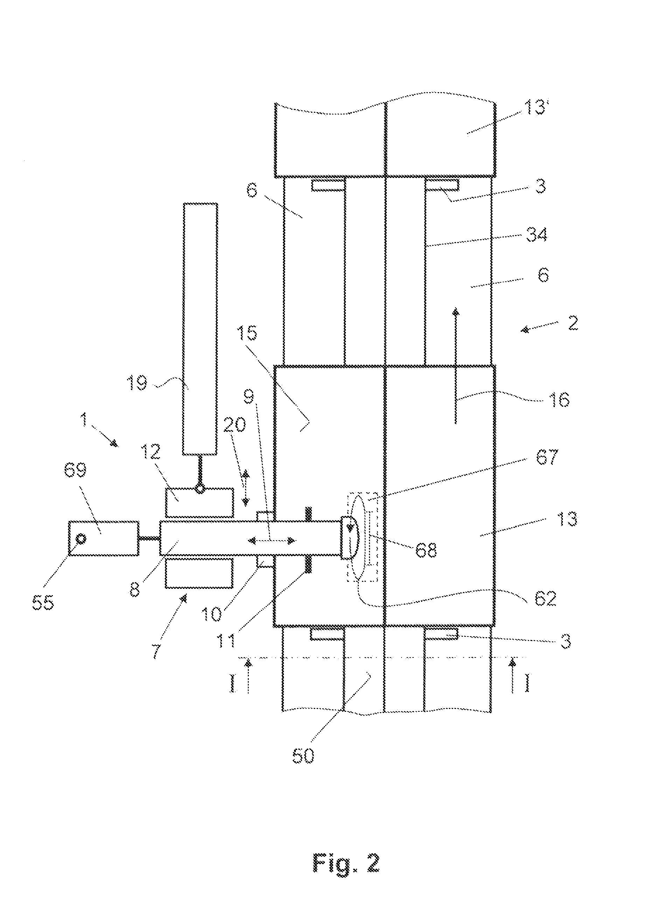

Die in den Figuren 1 und 2 gezeigte Messvorrichtung 1 ist an einem an sich bekannten Sammelhefter 2 angeordnet, in dem geöffnete Druckprodukte 13 rittlings mit einer Transportvorrichtung 4 in Richtung des Pfeils 16 (Figur 2) transportiert werden. Die Transportvorrichtung 4 ist hier insbesondere eine Sammelkette, die in gleichen Abständen jeweils zwei seitlich vorragende Mitnehmer 3 aufweist, mit denen jeweils ein Druckprodukt 13 erfasst wird. Der Sammelhefter 2 besitzt ein Gestell 5, das an einem oberen Ende eine sattelförmige Führungsanordnung 34 besitzt, über welche die Druckprodukte 13 geführt werden. Diese Druckprodukte 13 besitzen jeweils einen Falz 14 und können einfach gefaltete Druckbogen oder auch Zeitungen, Zeitschriften, Broschüren sein. Die sattelförmige Führungsanordnung 34 gemäss Figur 1 und der Falz 4 sind aber nicht zwingend. Die Druckprodukte 13 können beispielsweise auch Bücher sein, die mit einer geeigneten Transportvorrichtung transportiert werden. Beispielsweise ist auch ein Transport in einem Kanal oder dergleichen möglich.

Die Messvorrichtung 1 weist ein Messelement 8 auf, das in einem Führungselement 12 in den Richtungen des Doppelpfeils 9 verschieblich geführt ist. Mit dem Führungselement 12, das mit einem Antrieb 19 verbunden ist, kann das Messelement 8 um eine Schwenkachse 55 verschwenkt werden. Die Schwenkbewegungen des Messelementes 8 in den Richtungen des Doppelpfeils erfolgen im Takt mit dem Transport der Druckprodukte 13. Das Messelement 8 ist mit einem weiteren, in der Achse 55 gelagerten, Antrieb 69 verbunden, der das Messelement 8 in Richtung des Doppelpfeils 9 bewegt. Diese Zustellbewegung erfolgt ebenfalls im Takt der geförderten Druckprodukte 13. Die Antriebe 19 und 69 weisen vorzugsweise einen hier nicht gezeigten Linearmotor auf.

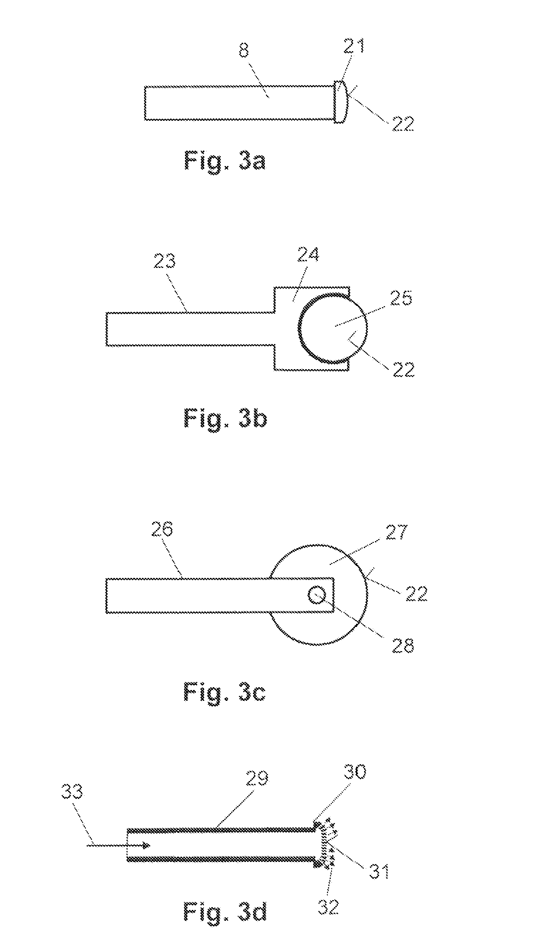

Das Messelement 8 ist Stab- bzw. Stempelförmig ausgebildet und besitzt gemäss der Figur 3a einen Kopf 21 mit einer Abtastfläche 22. Dieser Kopf 21 bildet das vordere bzw. frontseitige Ende des Messelementes 8. Das in Figur 3b gezeigte alternative Messelement 23 besitzt einen Kopf 24, in dem eine Kugel 25 drehbar gelagert ist. Diese Kugel 25 bildet in diesem Fall die Abtastfläche 22. Bei der Ausführung gemäss der Figur 3c ist ein Messelement 26 vorgesehen, das am vorderen Ende ein Rad 27 besitzt, das um eine Achse 28 drehbar gelagert ist. Hier bildet das Rad 27 die genannte Abtastfläche 22. Schliesslich zeigt die Figur 3d eine Schnittdarstellung einer weiteren alternativen Ausführung eines Messelementes 29, das einen Kopf 30 aufweist, der eine Abtastfläche 31 besitzt, auf welcher ein Luftpolster 32 erzeugt werden kann. Der Kopf 30 besitzt hierzu Durchgänge oder Poren, denen in Richtung des Pfeils 33 Luft mit einem vorbestimmten Druck zugeführt werden kann. Die Luft gelangt durch die genannten Durchgänge bzw. Poren auf die Abtastfläche 31 und bildet hier ein Luftpolster 32.

Am Messelement 8 ist gemäss Figur 1 ein Teil 11 befestigt, das mit dem Messelement 8 bewegt wird. Das Teil 11 dient zum Messen des Abstandes zwischen diesem beweglichen Teil 11 und einem stationären Distanzmessmittel 10, das mit einer Auswertevorrichtung 17 verbunden ist. Der Abstand wird beispielsweise optisch mittels eines Lasers bestimmt. Der Laserstrahl wird hier am Teil 11 reflektiert. Solche Messmittel sind dem Fachmann bekannt und brauchen hier deshalb nicht näher erläutert zu werden. Aufgrund dieser Distanzmessung kann entsprechend die Position des Messelementes 8 bestimmt werden.

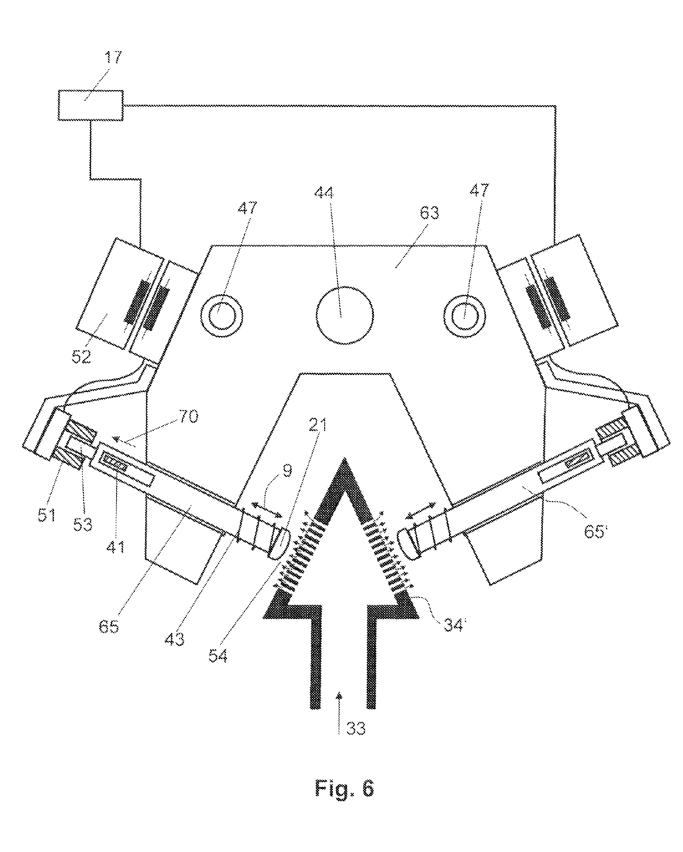

Alternativ zur genannten optischen Messung der Distanz zwischen dem Teil 11 und dem Distanzmittel 10 ist auch die in Figur 6 gezeigte Messung mit einer Messspule 51 möglich, in der ein Ferritkern 53 des Messelementes 8' eintaucht. Die Induktivität der Messspule wird über die berührungslos arbeitende Übertragungseinheit 52 an die Auswertevorrichtung 17 übertragen. Das Messelement wird so bewegt, dass die Abtastfläche 22 eine Aussenseite 15 des Druckproduktes 13 innerhalb eines Messbereichs 67 der Führungsanordnung 34 beaufschlagt. Die Dauer der Beaufschlagung ist einstellbar. Der Weg, der ein Druckprodukt 13 während der Dauer der Beaufschlagung durch das Messelement 8 auf der Transporteinrichtung 4 zurücklegt, wird als Messstrecke 68 bezeichnet. Denkbar sind aber auch andere geeignete Distanzmessungen.

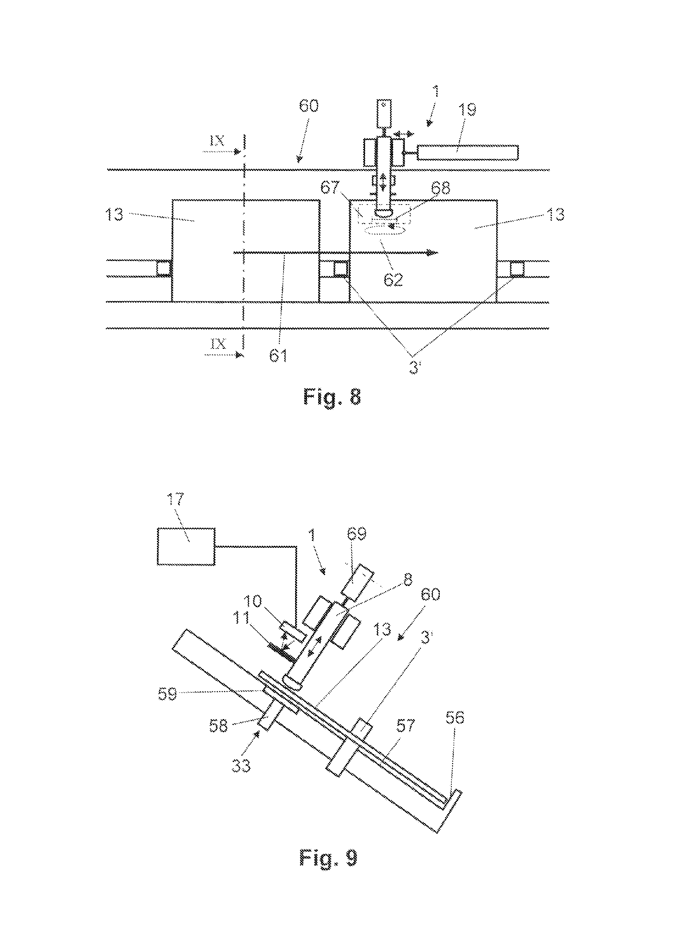

Der Kopf 21 des Messelements 8 beschreibt durch die Überlagerung der Schwenkbewegung um die Schwenkachse 55 und der Zustellbewegung in Richtung des Doppelpfeils 9 eine Bahn 62, wie dies in Figur 2 angedeutet ist. Dies gilt entsprechend für die Messelemente 23, 26 und 29. Die Schwenkgeschwindigkeit ist so eingestellt, dass sich die Abtastfläche 22 in Transportrichtung des Druckproduktes 13 entlang der Messstrecke 67 im Wesentlichen mit der Geschwindigkeit des Druckproduktes 13 bewegt. Es ist vorteilhaft, wenn die Dauer der Beaufschlagung der Druckprodukte 13 durch das Messelement 8 konstant und unabhängig von der Fördergeschwindigkeit der Transporteinrichtung 4 ist. Die Messstrecke 68 wird demzufolge mit zunehmender Fördergeschwindigkeit kürzer. Es ist aber auch denkbar, dass die Messstrecke 68 konstant bleibt, indem die Dauer der Beaufschlagung an die Fördergeschwindigkeit der Transportvorrichtung 4 angepasst wird. Am Ende der Messstrecke 48 zieht der Antrieb 69 das Messmittel 8 zurück und mit einer Schwenkbewegung wird das Messmittel 8 in die Ausgangsstellung gebracht. Der Kopf 21 des Messmittels 8 beschreibt für die Durchführung einer Messung eine Bahn 62, wie sie in Figur 2 und 8 dargestellt ist. Es ist denkbar, dass mehrere Messungen an einem Druckprodukt 13 durchgeführt werden.

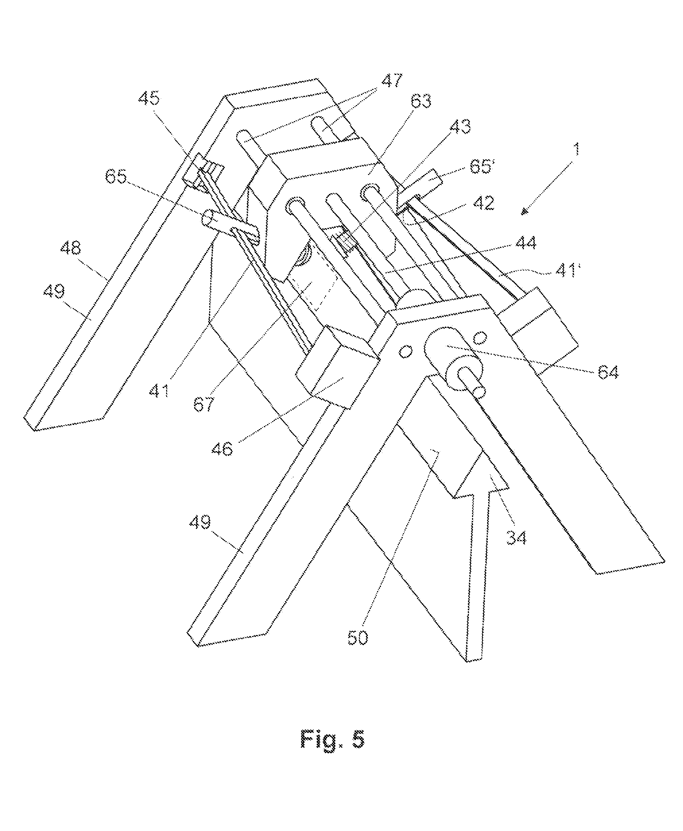

Bei der alternativen Ausführung gemäss Figur 5, ist das Führungselement 63 an zwei Führungsstangen 47, die parallel zur Transportrichtung verlaufen verschiebbar gelagert. Die beiden Stangen 47 sind an zwei im Abstand zueinander angeordneten Trägern 49 befestigt. Das Führungselement 63 kann somit zwischen diesen Trägern 49 hin und her verschoben werden. Zum Bewegen des Führungselementes 63 ist ein Antrieb 64 vorgesehen, der an einem der Träger 49 abgestützt ist und über eine Antriebsstange 44 mit dem Führungselement 63 verbunden ist. Der Antrieb 64 besitzt beispielsweise einen hier nicht näher gezeigten Linearmotor. Dieser ist entsprechend dem Takt der Transportvorrichtung 4 gesteuert.

Die Bewegung des Messelementes 65 quer zur Transportrichtung wird mit einer Steuerstange 41 gesteuert, die an einem Ende über ein Drehgelenk 45 mit einem der Träger 49 verbunden ist. Am anderen Ende ist die Steuerstange mit einem Antrieb 46 verbunden, der die Steuerstange 41 in Richtung des in Figur 6 gezeigten Pfeils 70 von der Führungsanordnung 34 weg bewegt. Das Messelement 65 weist an einem Ende, das dem Kopf 21 gegenüberliegt, eine Ausnehmung auf, in die die Steuerstange 41 eingreift. Um ein Druckprodukt 13 mit dem Messelement 65 zu beaufschlagen, bewegt der Antrieb 46 die die Steuerstange 41 entgegen der Richtung der Pfeils 70. Ein auf das Messelement 65 wirkendes Federelement 43 bewirkt, dass das Messelement 65 im Messbereich 67 gegen die Führungsanordnung 34 bezeichnungsweise gegen ein Druckprodukt 13 presst. Am Ende der Messung wird das Messelement 65 von der Steuerstange 41 vom Druckprodukt abgehoben, wobei das Federelement zusammengedrückt wird. Das oben erwähnte Distanzmessmittel 10 ist in der Figur 5 nicht dargestellt. Die Distanzmessung kann hier ebenfalls gemäss Figur 6 mit einer Messspule 51 und einem Ferritkern 53 oder alternativ optisch erfolgen.

Wird ein Druckprodukt 13 auf der Führungsanordnung 34 durch einen Messspalt 54 bewegt, so wird das Druckprodukt 13 im Abstand zur Führungsanordnung 34 durch zwei Leitbleche 6 geführt. Gleichzeitig wird die Dicke des Druckproduktes 13 wenigstens in einem Bereich unterhalb des Falzes 14 gemessen. Hierzu wird das Messelement 8 in Förderrichtung vorzugsweise im Wesentlichen in gleicher Geschwindigkeit wie das Druckprodukt 13 bewegt. Wenn der Kopf 21 des Messelements 65 mit seiner Frontseite unter dem Druck des Federelementes 43 das Druckprodukt 13 entlang der Messstrecke 68 beaufschlagt, so bewegt sich das Messelement 65 somit im Wesentlichen mit der gleichen Geschwindigkeit wie das Druckprodukt 13. Die Messung kann somit ohne Bewegung zwischen der Abtastfläche 22 und der Aussenseite 15 des Druckproduktes 13 und somit ohne Reibung und Walken erfolgen. Auf Grund des Druckes des Messelementes 8, 65 wird das Druckprodukt 13 im beaufschlagten Bereich gegen die Fläche 50 der Führungsanordnung 34 gepresst. Die Führungsanordnung 34 bildet somit einen gestellfesten Hintergrund für das transportierte Druckprodukt 13.

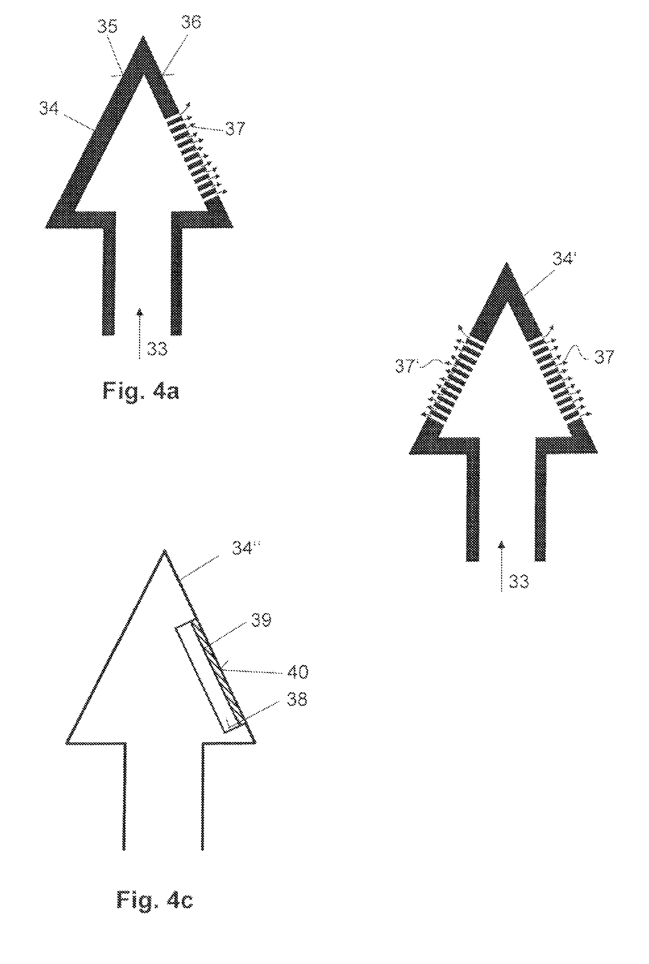

Um eine Beschädigung des Druckproduktes 13 im beaufschlagten Bereich an der Führungsanordnung 34 möglichst klein zu halten, sind beispielsweise die in den Figuren 4a bis 4c gezeigten Führungsanordnungen 34, 34' und 34'' möglich. Bei der Führungsanordnung 34 gemäss der Figur 4a besitzt diese zwei spitzwinklig zueinander verlaufende Flächen 35 und 36. Die Beaufschlagung ist hier auf der Fläche 36 vorgesehen. Zur Verminderung einer Reibung ist auf dem auf der Fläche 36 liegenden Messbereich 67 ein Luftpolster 37 erzeugbar. Hierzu besitzt die Fläche 36 eine Mehrzahl von Durchgängen. Diese können einen vergleichsweise kleinen Durchmesser von beispielsweise 10 bis 30 Mikrometer besitzen. Im Inneren der Führungsanordnung 34 wird ein Luftdruck von beispielsweise einigen Bar, beispielsweise 6 Bar erzeugt. Die Luft strömt durch die Durchgänge nach aussen und bildet das genannte Luftpolster 37.

Bei der Führungsanordnung 34' gemäss Figur 4b werden auf beiden Flächen Luftpolster 37 bzw. 37' gebildet. Diese Führungsanordnung 34' ist für eine Ausführung gedacht, bei welcher zwei symmetrisch angeordnete Messelemente 65 und 65' verwendet werden, wie dies in den Figuren 5 und 6 gezeigt ist. Diese Ausführung wird weiter unten noch näher erläutert.

Die Führungsanordnung 34'' gemäss der Figur 4c besitzt im Messbereich 67 eine Ausnehmung 38, in welche ein plattenförmiger Einsatz 39 eingesetzt ist. Dieser Einsatz 39 besitzt eine Fläche 40, welche eine besonders hohe Gleitfähigkeit bezüglich des Druckproduktes 13 besitzt. Der reibungsmindernde Einsatz 39 kann beispielsweise aus einem geeigneten fluorierten Kunststoff hergestellt oder geeignet beschichtet sein. Hier ist auch alternativ oder zusätzlich ein Luftpolster möglich.

Die Wege der Messelemente 65 und 65' werden bis zur Beaufschlagung des Druckproduktes 13 wie oben erläutert mit dem Distanzmessmittel 10 oder mittels Spule 51 gemessen und der entsprechende Messwert der Auswertevorrichtung 17 übermittelt. Dieser Weg ist umso kleiner, je dicker das Druckprodukt 13 in beaufschlagtem Bereich ist. Der gemessene Wert wird mit einem Referenzwert verglichen, welcher ohne das Vorhandensein eines Druckproduktes 13 ermittelt wird. Eine solche Referenzmessung kann periodisch wiederholt werden.

Nach der Beaufschlagung des Druckproduktes 13 werden die Messelemente 65 und 65' wieder in die hohe Stellung bewegt. Hierbei wird die Feder 43 gespannt. Die Bewegung erfolgt beispielsweise kurvengesteuert oder wie oben beschrieben mit einem Linearmotor. Wie bereits oben erläutert, kann im gleichen Takt ein Druckprodukt 13 auch zwei oder mehr als zweimal in verschienen Bereichen gemessen werden. Beispielsweise kann damit kontrolliert werden, ob wie vorgesehen auf das Druckprodukt 13 eine Karte, ein Warenmuster oder dergleichen aufgeklebt ist. Zudem kann mit solchen Messungen ein Mittelwert errechnet werden. Es ist jedenfalls eine noch sichere und präzisere Messung möglich.

Bei der Ausführung gemäss der Figur 5 und 6 werden symmetrisch zu einer Mittelebene die Messungen jeweils gleichzeitig mit den zwei Messelementen 65 und 65' durchgeführt. Die von den Messelementen 65 und 65' ausgeübten Messkräfte heben sich dadurch weitgehend auf. Dadurch ist eine noch genauere Messung möglich. Zudem werden die Druckprodukte 13 jeweils in zwei Bereichen gemessen. Diese Bereiche können unterschiedlich oder gleich Dick sein. Beispielsweise ist dadurch auf einer Seite beispielsweise auf der Seite des Messelementes 65' ein Warenmuster angeordnet, das damit ebenfalls gemessen bzw. seine Anwesenheit kontrolliert wird.

Die Figuren 8 und 9 zeigen eine Einsteckmaschine 60, bei welcher Druckprodukte 13 mit Mitnehmern 3' in einem Kanal 57 transportiert werden. Die Transportrichtung in der Figur 8 erfolgt von links nach rechts wie mit dem Pfeil 61 angedeutet ist. Die Druckprodukte 13 liegen hier jeweils an einer unteren Kante 56 des Kanals 57 auf. Die Dickenmessung erfolgt mit einer Messvorrichtung 1, die wie oben erläutert ausgeführt sein kann. Das Messelement 8 beaufschlagt anstelle der Führungsanordnung 34 eine den Messbereich 67 bildende Platte 59, die stationär im Kanal 57 angeordnet ist. Die Platte 59 kann reibungsmindernd ausgebildet sein. Sie kann aus einem die Gleitfähigkeit optimierenden Werkstoff gebildet sein oder hier nicht gezeigte Durchbrüche aufweisen und durch einen Luftanschluss 58 mit Druckluft verbunden sein. Entsprechend bildet sich auf der Oberseite der Platte 59 ein hier nicht gezeigtes Luftpolster. Die Druckprodukte 13 werden auch hier hintereinander im Takt transportiert und können einzelne Bogen, Zeitungen, Broschüren, Bücher und dergleichen sein.

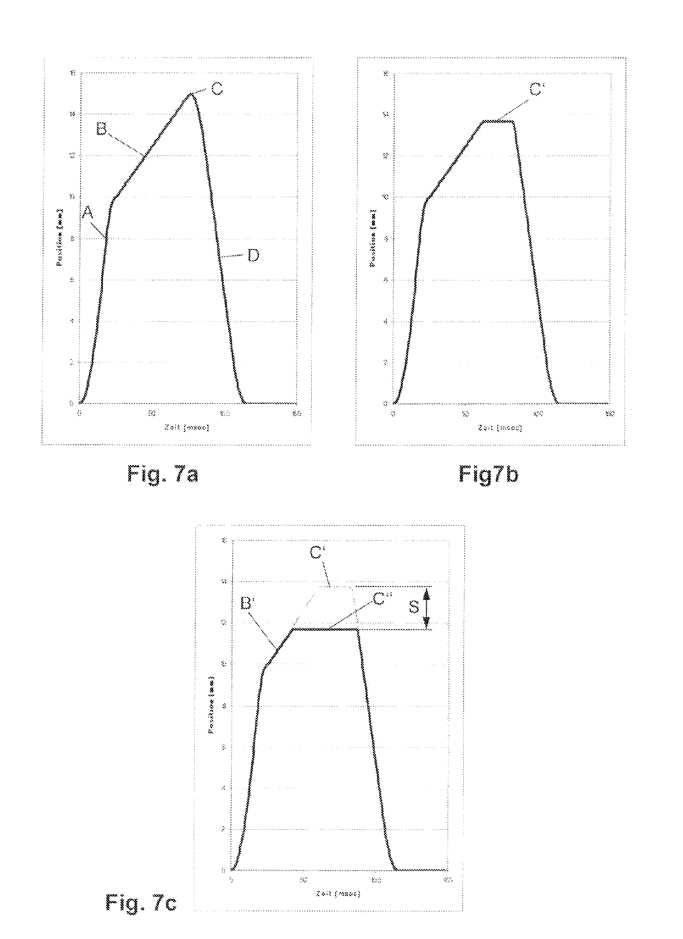

Die Figur 7a zeigt als Kurve die Position der Abtastfläche 22 bei einem Abtastvorgang, bei dem weder ein Druckprodukt 13 noch eine Führungsanordnung 34 vorhanden sind. Die Bewegung des Messelementes 8 ist so gesteuert, dass sie in einem Bereich A mit einer vergleichsweise hohen Geschwindigkeit bewegt wird. In einem Bereich B wird dann diese Geschwindigkeit bis zum Punkt C vermindert. Nach dem Punkt C erfolgt ein Bereich D, in dem das Messelement 8 wieder in die Ruhestellung bzw. Ausgangsstellung bewegt wird. Diese Bewegung wird gegen die Spannung der Feder 43 ausgeführt und kann ebenfalls mit vergleichsweise hoher Geschwindigkeit erfolgen. Der gesamte Zyklus erfolgt beispielsweise in einem Zeitintervall von etwa 100 Millisekunden. Der Ausfahrweg beträgt hier beispielsweise 14 bis 16 Millimeter.

Die Figur 7b zeigt die Bewegung des Messelementes 8 bei einer Referenzmessung. Gemessen wird somit ohne Druckprodukt 13 gegen eine ortsfeste Führungsanordnung 34. Durch das Beaufschlagen der Führungsanordnung 34 bzw. der Platte 59 entsteht ein Bereich C', in welchem das Messelement 8 auf der Führungsanordnung 34 entlang gleitet. Für eine Referenzmessung kann aber auch auf die Bewegung des Messelementes 8, 65, 65' in Transportrichtung verzichtet werden. Das Messelement 8 kann in diesem Fall nur durch eine Zustellbewegung in Richtung des Doppelpfeils 9 die Führungsanordnung beaufschlagen.

Die Figur 7c zeigt den Verlauf der Kurve bei einer Dickemessung eines Druckproduktes 13. Auf Grund einer Dicke S des einen Schenkels des Druckproduktes 13 wird der Weg des Messelementes 8 begrenzt, so dass ein Bereich C" besteht, der entsprechend länger ist als der Bereich C'. Vor dem Erreichen des Bereiches C" besteht auch hier ein Bereich B', in dem die Geschwindigkeit des Messelementes 8 verringert ist. Dies hat den wesentlichen Vorteil, dass das Messelement 8 bzw. die Abtastfläche 22 mit vergleichsweise geringer Geschwindigkeit auf dem Druckprodukt auftrifft und somit entsprechend wenig Markierungen hinterlässt. Eine geeignete und optimale Geschwindigkeitsreduktion kann aus einer Referenzmessung gemäss Figur 7b abgeleitet werden. Die Dicke S eines Schenkels des Druckproduktes 13 gemäss der Messung nach Figur 7c beträgt wie ersichtlich etwa 2 Millimeter, wie ein Vergleich der Figuren 7b und 7c zeigt. Mit der erfindungsgemässen Messvorrichtung können Dicken von 0,05 bis 20 Millimeter oder auch grössere Dicken gemessen werden.

## Patentansprüche

1. Vorrichtung zum Messen der Dicke von mittels Transportvorrichtung (4) entlang einer Führungsanordnung (34) geförderten Druckprodukten (13), mit einem mit der Führungsanordnung (34) einen Messspalt (54) bildenden, die Druckbogen (13) auf der von der Führungsanordnung (34) abgewandten Seite beaufschlagenden Messelement (18, 23, 26, 29, 65), das mit einer Auswertevorrichtung (17) verbunden ist, **dadurch gekennzeichnet, dass** das gegen die Führungsanordnung (34) im Verarbeitungstakt auf die Druckprodukte (13) zugestellte Messelement (18, 23, 26, 29, 65) über einen sich zur Förderrichtung erstreckenden Messbereich (67) der Führungsanordnung (34) synchron mit der Fördergeschwindigkeit bewegbar ist.

2. Vorrichtung nach Anspruch 1, **dadurch gekennzeichnet, dass** der Messbereich (67) einen Teil der Führungsanordnung (34) bildet.

3. Vorrichtung nach Anspruch 2, **dadurch gekennzeichnet, dass** der Messbereich (67) reibungsmindernd ausgebildet ist.

4. Vorrichtung nach Anspruch 3, **dadurch gekennzeichnet, dass** der Messbereich (67) durch ein Luftpolster (37) gebildet ist.

5. Vorrichtung nach Anspruch 3, **dadurch gekennzeichnet, dass** der Messbereich (67) durch einen die Gleitfähigkeit optimierenden Werkstoff gebildet ist.

6. Vorrichtung nach einem der Ansprüche 1 bis 3, **dadurch gekennzeichnet, dass** eine Messstrecke (68) in dem Messbereich (67) durch die Verharrungszeit des Messelementes (8, 23, 26, 29, 65) an dem Druckprodukt (13) bestimmt ist.

7. Vorrichtung nach einem der Ansprüche 1 bis 6, **dadurch gekennzeichnet, dass** die Zustellbewegung des Messelementes (8, 23, 26, 29, 65) verzögerbar ist.

8. Vorrichtung nach einem der Ansprüche 1 bis 7, **dadurch gekennzeichnet, dass** Messmittel (10, 11) vorgesehen sind, mit denen beim Messen der Abstand des Messelementes (8) von der Führungsanordnung (34) bestimmbar ist.

9. Vorrichtung nach Anspruch 8, **dadurch gekennzeichnet, dass** das Messmittel (10, 11) als Sensor oder elektrische Spule ausgebildet ist.

10. Vorrichtung nach einem der Ansprüche 1 bis 9, **dadurch gekennzeichnet, dass** das Messelement (8, 23, 26, 29, 65) auf einem Führungselement (12, 63) angeordnet ist, das für eine Messung bzw. Abtastung eines Druckproduktes (13) in Transportrichtung des Druckproduktes (13) und wieder zurück in die Ruhestellung motorisch antreibbar ist.

11. Vorrichtung nach einem der Ansprüche 1 bis 10, **dadurch gekennzeichnet, dass** das Messelement (8, 29, 65) an einem vorderen Ende Mittel zum Bilden eines Luftpolsters (32) aufweist.

12. Vorrichtung nach einem der Ansprüche 1 bis 11, **dadurch gekennzeichnet, dass** das Messelement (8, 23, 26, 29, 65) zum Abtasten der zu messenden Druckprodukte (13) linear bewegt oder um ein hinteres Ende verschwenkt wird.

13. Vorrichtung nach einem der Ansprüche 1 bis 12, **dadurch gekennzeichnet, dass** das Messelement (8, 23, 26, 29, 65) durch die Kraft einer gespannten Feder (43) auf das Druckprodukt (13) zustellbar ist.

14. Vorrichtung nach einem der Ansprüche 1 bis 13, **dadurch gekennzeichnet, dass** sie wenigstens zwei Messelemente (8, 23, 26, 29, 65) aufweist, die bezüglich der Transportrichtung der Transportvorrichtung (4) im Wesentlichen symmetrisch zueinander angeordnet sind.

15. Vorrichtung nach Anspruch 14, **dadurch gekennzeichnet, dass** die Messelemente (8, 23, 26, 29, 65) gleichzeitig betätigbar sind.

16. Vorrichtung nach einem der Ansprüche 1 bis 15 bei einer Sammelvorrichtung, auf der die Druckprodukte (13) durch Mitnehmer (3) rittlings transportiert und die Dicke wenigstens eines Schenkels der Druckprodukte (13) gemessen wird.

17. Vorrichtung nach einem der Ansprüche 1 bis 15, bei einer Zusammentragmaschine, in der die Dicke der Druckprodukte (13) in einem Kanal (57) gemessen wird.
